Europäisches Patentamt

European Patent Office

Office européen des brevets

(19)

(11) Veröffentlichungsnummer: **0 219 801**
**B1**

(12) **EUROPÄISCHE PATENTSCHRIFT**

(45) Veröffentlichungstag der Patentschrift: **19.09.90**

(21) Anmeldenummer: **86114193.5**

(22) Anmeldetag: **14.10.86**

(51) Int. Cl.[5]: **B 32 B 17/10,** C 03 C 27/12, E 06 B 5/16

(54) **Feuerwiderstandsfähige Verglasungseinheit.**

(30) Priorität: **19.10.85 DE 3537255**

(43) Veröffentlichungstag der Anmeldung:
**29.04.87 Patentblatt 87/18**

(45) Bekanntmachung des Hinweises auf die Patenterteilung:
**19.09.90 Patentblatt 90/38**

(84) Benannte Vertragsstaaten:
**AT BE CH DE FR GB IT LI NL SE**

(56) Entgegenhaltungen:
**EP-A-0 070 394**
**DE-C- 657 447**
**US-A-4 341 576**

(73) Patentinhaber: **VEGLA Vereinigte Glaswerke GmbH**
**Viktoriaallee 3-5**
**D-5100 Aachen (DE)**

(72) Erfinder: **Ortmanns, Günter, Dr.**
**Höfchensweg 121**
**D-5100 Aachen (DE)**
Erfinder: **Nieven, Jakob**
**Kolmondstraat 96**
**NL-Vaals (NL)**

(74) Vertreter: **Biermann, Wilhelm, Dr.-Ing. et al**
**VEGLA Vereinigte Glaswerke GmbH**
**Viktoriaallee 3-5**
**D-5100 Aachen (DE)**

EP 0 219 801 B1

**Beschreibung**

Die Erfindung betrifft die Verwendung einer Verbundglasscheibe als feuerwiderstandsfähige Verglasung.

Die Anforderungen, die gegen Feuer widerstandsfähige Verglasungen erfüllen müssen, ergeben sich aus DIN 4102, Teil 5, Ausgabe September 1977. Um der Feuerwiderstandsklasse G 30 zu entsprechen, müssen die Verglasungen für einen Zeitraum von wenigstens 30 Minuten bei nach DIN 4102, Teil 2, vorgeschriebenen Brandversuchen als Raumabschluß wirksam bleiben. Auf der vom Feuer abgekehrten Seite der Verglasungen dürfen weder Flammen noch Brandgase auftreten.

Bei einer ersten bekannten feuerwiderstandsfähigen Verglasung der eingangs genannten Art (DE-OS 24 56 991) besteht wenigstens eine der Glasscheiben aus einem hitzebeständigen Spezialglas, nämlich aus einem Borosilikat- oder Alumosilikatglas mit niedrigem Wärmeausdehnungskoeffizienten bzw. mit einem niedrigen Produkt aus Wärmeausdehnungskoeffizient α und Elastizitätsmodul E, und diese Spezialglasscheibe weist im Randbereich eine Druckspannung auf. Solche Spezialgläser sind teuer, und die Herstellung optisch einwandfreier, das heißt verzerrungsfreier Glasscheiben aus diesen Spezialgläsern ist wegen der hohen Viskosität solcher Glasschmelzen mit erheblichen Schwierigkeiten verbunden. Die einzelnen Glasscheiben dieser bekannten Verglasung sind mit Luftabstand von 10 bis 100 mm voneinander angeordnet. Dabei ist es auch bekannt, die eine der beiden mit Luftabstand voneinander angeordneten Glasscheiben durch eine Verbundglasscheibe aus zwei vorgespannten üblichen Silikatglasscheiben zu ersetzen, während die andere der beiden mit Luftabstand voneinander angeordneten Glasscheiben aus dem hitzebeständigen Spezialglas besteht.

Bei einer anderen bekannten feuerwiderstandsfähigen Verglasung sind zwei oder mehr Silikatglasscheiben üblicher Zusammensetzung ebenfalls mit Luftabstand voneinander angeordnet, wobei die auf der der Hitzeeinwirkung zugewandten Seite angeordnete Glasscheibe eine armierte Glasscheibe, und die auf der der Hitzeeinwirkung abgewandten Seite angeordnete Glasscheibe eine nichtarmierte jedoch vorgespannte Glasscheibe ist (DE-PS 26 45 259). Die armierte Glasscheibe kann in diesem Fall eine zweischichtige Verbundglasscheibe sein. Diese Verglasungseinheit mit einem solchen unsymmetrischen Aufbau erfüllt die Anforderungen der Feuerwiderstandsklasse G 30 nur dann, wenn das Feuer auf die armierte Glasscheibe einwirkt. Da jedoch nach DIN 4102, Teil 5, bei unsymmetrischen Verglasungen das Feuer bei einem probekörper auf die eine Seite und bei einem weiteren probekörper auf die andere Seite einwirken soll, haben diese bekannten Verglasungen nur dann mit Sicherheit die gewünschten Eigenschaften, wenn auf beiden Seiten der nichtarmierten vorgespannten Glasscheibe jeweils mit Luftabstand eine armierte Glasscheibe angeordnet ist. Eine Verglasung mit einem derartigen Aufbau ist jedoch sehr aufwendig.

Aus der US-A-4.341.576 sind Verbundglasscheiben bekannt, die aus drei oder mehr thermisch vorgespannten Floatglasscheiben und Zwischenschichten aus einem Kunststoff wie Polyvinylbutyral bestehen.

Auch aus der DE-C-657.447 sind Verbundgläser bekannt, die aus mehreren thermisch vorgespannten Glasscheiben mit dazwischen angeordneten elastischen Zwischenschichten bestehen.

Der Erfindung liegt die Aufgabe zugrunde, eine der Feuerwiderstandsklasse G 30 entsprechende Verglasungseinheit mit symmetrischem Aufbau zu schaffen, die einfach in ihrer Herstellung ist, keine die Sicht behindernde Armierungen wie Drahteinlagen aufweist, und ausschließlich aus Einzelglasscheiben der üblichen Floatglaszusammensetzungen besteht.

Erfindungsgemäß wird diese Aufgabe dadurch gelöst, daß eine aus wenigstens drei jeweils mindestens 3 mm dicken parallel zueinander angeordneten, durch durchsichtige Kleberschichten aus einem thermoplastischen Kunststoff wie Polyvinylbutyral zu einer Verbundglasscheibe miteinander verbundenen einzelnen Floatglasscheiben bestehenden Verglasung, bei der wenigstens die beiden äußeren Floatglasscheiben thermisch vorgespannt sind, als feuerwiderstandsfähige Verglasung der Feuerwiderstandsklasse G 30 nach DIN 4102 verwendet wird.

Es hat sich überraschenderweise gezeigt, daß an sich bekannte Verbundglasscheiben aus üblichem Floatglas die strengen Anforderungen der Feuerwiderstandsklasse G 30 erfüllen. Derartige Verbundglasscheiben erfüllen auch alle oben genannten Anforderungen. Insbesondere sind sie klar durchsichtig, symmetrisch aufgebaut und haben insgesamt eine verhältnismäßig geringe Dicke. Ferner sind sie einfach herzustellen, nämlich nach den bekannten und üblichen Verfahren für die Herstellung von vorgespanntem Einscheibensicherheitsglas und von Verbundsicherheitsglas.

Die feuerhemmenden Eigenschaften der genannten Verbundgläser beruhen auf dem Zusammenwirken der wärmeabsorbierenden Eigenschaften der einzelnen Glasscheiben einerseits und der erhöhten Standzeit einer vorgespannten Glasscheibe bis zum Bersten bzw. Zersplittern im Vergleich zu derjenigen einer nicht vorgespannten Glasscheibe andererseits, wobei diese Eigenschaften sich gegenseitig beeinflussen und im Zusammenwirken zu dem angestrebten Ziel führen.

Wenn die dem Feuer zugewandte vorgespannte Einzelglasscheibe nach einigen Minuten aufgrund der Zugspannungen zerbricht, die wegen der steigenden Temperaturdifferenz zwischen dem Randbereich und dem Mittelfeld der Glasscheibe im Randbereich entstehen, hat wegen der wärmeabsorbierenden Wirkung dieser ersten Glasscheibe die zweite Glasscheibe im Mittelfeld erst eine Temperatur erreicht, die wesentlich unterhalb der Temperatur der ersten Glasscheibe im Mittelfeld liegt. Nach dem Zerbersten der ersten Glasscheibe dauert es deshalb wiederum einige Minuten, bis in der zweiten Glasscheibe zwischen Scheibenmitte und Scheibenrand eine Temperaturdifferenz entstanden ist, die zu solchen Zugspannungen im Randbereich der zweiten Glasscheibe führt, daß auch diese zweite Glasscheibe zerbricht. Erst beim Zerbersten der zweiten Glasscheibe wird die dritte Glasscheibe, bei der es sich wiederum um eine vorgespannte Glasscheibe handelt, für die unmittelbare Hitzebeaufschlagung freigegeben. Da einerseits bis zu diesem Augenblick das Mittelfeld der dritten Glasscheibe gegen die unmittelbare Hitzebeaufschlagung geschützt und daher ihre Temperatur nur verhältnismäßig langsam angestiegen war, andererseits aber der Randbereich dieser dritten Glasscheibe durch die Wärmeleitung über den metallischen Rahmen bereits stark erwärmt wurde, ist zu diesem Zeitpunkt die Temperaturdifferenz zwischen der Scheibenfläche und dem im Einbaurahmen sitzenden Randbereich verhältnismäßig gering und bleibt auch während der weiteren Hitzeeinwirkung so niedrig, daß sie nicht zu den für ein Zerbersten dieser dritten Glasscheibe erforderlichen Zugspannungen im Randbereich dieser dritten Glasscheibe führt. Infolgedessen bleibt zumindest diese dritte Glasscheibe so lange unzerbrochen im Rahmen, bis sie zu erweichen beginnt und dadurch in sich zusammensackt. Das aber erfolgt erst zu einem Zeitpunkt, der mit Sicherheit erst nach dem geforderten Zeitintervall von 30 Minuten liegt.

In vielen Fällen erfüllen bereits Verglasungseinheiten, bei denen zwei äußere vorgespannte Glasscheiben mit einer mittleren nicht vorgespannten Glasscheibe verbunden sind, die Bedingungen entsprechend der Feuerwiderstandsklasse G 30. Eine größere Sicherheit erreicht man jedoch, und darin besteht eine vorteilhafte Weiterentwicklung der Erfindung, wenn auch diese mittlere Silikatglasscheibe aus vorgespanntem Glas besteht, weil auf diese Weise der Zeitpunkt, zu dem die dritte Glasscheibe der unmittelbaren Hitzeeinwirkung ausgesetzt wird, wegen der erhöhten Standzeit der zweiten Glasscheibe weiter hinausgeschoben wird.

Die Feuerwiderstandsdauer läßt sich gewünschtenfalls dadurch erhöhen, daß vier oder mehr jeweils vorgespannte Glasscheiben zu einer Verbundglaseinheit verarbeitet werden.

Die Dicke der einzelnen Glasscheiben, und damit die Dicke der gesamten Verglasungseinheit, ist nicht kritisch, sofern die einzelnen Glasscheiben jeweils eine Mindestdicke von wenigstens 3 mm aufweisen. Es hat sich andererseits gezeigt, daß sich oberhalb einer bestimmten Dicke der einzelnen Glasscheiben auch keine wesentliche Erhöhung der Feuerwiderstandsdauer mehr erreichen läßt. Vorzugsweise haben die einzelnen Silikatglasscheiben eine Dicke

von jeweils etwa 4 bis 6 mm, so daß die fertige Verglasungseinheit eine Gesamtdicke von lediglich etwa 12 bis 18 mm aufweist.

Ebenso wenig wie die Dicke der Silikatglasscheiben ist die Dicke und das Material der Klebeschichten zwischen den Einzelglasscheiben für die Funktionstüchtigkeit der Verglasungseinheit kritisch. Für den erfindungsgemäßen Zweck eignen sich z.B. die für die Herstellung von Verbundglasscheiben üblichen Folien aus Polyvinylbutyral, beispielsweise mit einer Dicke von 0,38 mm.

Eine bevorzugte Ausführungform der erfindungsgemäß verwendeten Verglasungseinheit besteht aus einem Verbundglas aus drei jeweils 4 mm dicken thermisch vorgespannten Glasscheiben aus Floatglas, wobei die Höhe der Vorspannung sich innerhalb der für Einscheibensicherheitsglas üblichen Werte bewegt. Diese drei thermisch vorgespannten Glasscheiben sind über zwei jeweils 0,38 mm dicke Kleberschichten aus thermoplastischem Polyvinylbutyral miteinander verbunden, wobei die Verbindung in an sich bekannter und üblicher Weise durch eine Wärme-Überdruck-Behandlung in einem Autoklav erfolgt.

Ein Ausführungsbeispiel der Erfindung wird anhand der Zeichnungen näher erläutert. Von den Zeichnungen zeigt

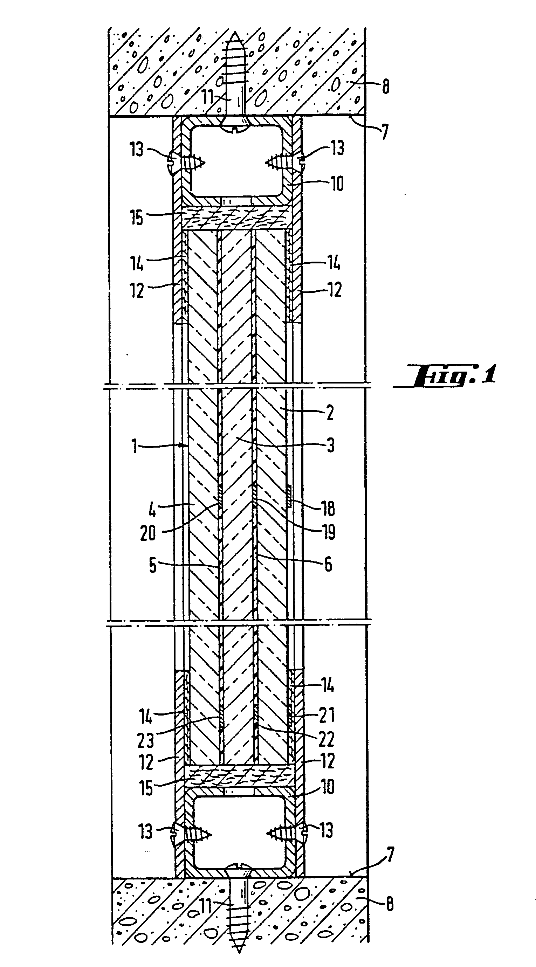

Fig. 1 einen senkrechten Schnitt durch eine erfindungsgemäße Verglasung, die zum Zwecke eines Brandversuchs in der Wandöffnung eines Brandofens eingesetzt ist, und

Fig. 2 das Versuchsprotokoll während eines Brandversuchs in Form eines Diagramms.

Die Verglasungseinheit ist eine Verbundglasscheibe 1 aus drei jeweils 4 mm dicken Glasscheiben 2, 3 und 4, jeweils aus thermisch vorgespanntem Floatglas, die mit Hilfe der thermoplastischen Kleberschichten 5, 6 aus Polyvinylbutyral unter Anwendung von Wärme und Druck miteinander verbunden sind. Die flächenmäßigen Abmessungen der Verbundglasscheibe betragen für den Brandversuch 160 × 120 cm. Die Verbundglasscheibe 1 ist innerhalb der Öffnung 7 in der Wand 8 eines Brandversuchsofens eingebaut, und zwar mit Hilfe einer geeigneten Stahlrahmenkonstruktion. Die Stahlrahmenkonstruktion umfaßt Vierkantrohrabschnitte 10, wobei die Breitenabmessungen des Vierkantrohres etwa der Dicke der Verbundglasscheibe 1 entsprechen. Die Vierkantrohrabschnitte 10 sind mit Hilfe von Schrauben 11 mit den die Öffnung 7 begrenzenden Flächen der Wand 8 verschraubt. Mit Hilfe der Glashalteleisten 12, die mit Schrauben 13 mit den Vierkantrohrabschnitten 10 verschraubt werden, wird die Verbundglasscheibe 1 am Rand eingespannt. Zwischen den Glashalteleisten 12 und der Glasscheibe sind Zwischenlagen 14 aus nicht brennbarem nachgiebigem Material angeordnet, beispielsweise Streifen aus einem im wesentlichen aus Mineralfasern bestehenden Material. Ebenso sind zwischen den Vierkantrohrabschnitten 10 und den Umfangsflächen der Verbundglasscheibe 1 wenigstens entlang der Unterkante der Verbundglasscheibe 1 als Auflager für die Verbundglasscheibe Profilstreifen 15 aus einem nicht brennbaren Material angeordnet.

Die Glasscheibe 2 der Verbundglasscheibe 1 ist dem Brandraum des Versuchsofens zugewandt und damit der direkten Flammeneinwirkung ausgesetzt, während die Glasscheibe 4 auf der dem Feuer abgewandten Seite angeordnet ist.

Der Brandversuch wird entsprechend DIN 4102, Teil 2, Ausgabe September 1977, Abschnitt 6.1 bis 6.2.5 durchgeführt. Während des Brandversuchs werden die Temperaturen an verschiedenen Stellen der Verbundglasscheibe gemessen, und zwar mit Hilfe von Thermoelementen, die mit den einzelnen Glasscheiben in Kontakt stehen. Die drei Thermoelemente 18, 19 und 20 sind etwa in der Mitte der Scheibenfläche angeordnet und geben so die Temperatur im Mittelfeld der Verglasung wieder. Die Thermoelemente 21, 22 und 23 sind in dem von den Glashalteleisten 12 abgedeckten Randbereich angeordnet und geben die Temperatur im unmittelbaren Randbereich der Glasscheiben wieder. Während die Thermoelemente 18 und 21 auf der dem Feuer zugewandten Oberfläche der Glasscheibe 2 angeordnet und mit einem geeigneten feuerfesten Kleber mit der Glasscheibe verklebt sind, stehen die Thermoelemente 19 und 22 mit der Oberfläche der Glasscheibe 3 in Kontakt, sind innerhalb der Zwischenschicht 6 angeordnet und geben die Temperatur der Glasscheibe 3 wieder. Die Temperatur der dem Feuer abgewandten Glasscheibe 4 wird mit den Thermoelementen 20 und 23 gemessen, die mit der Oberfläche dieser Glasscheibe in Kontakt stehen und innerhalb der Zwischenschicht 5 angeordnet sind. Die Thermoelemente 18, 19 und 20 einerseits und 21, 22 und 23 andererseits sind jeweils auf gleicher Höhe hintereinander angeordnet.

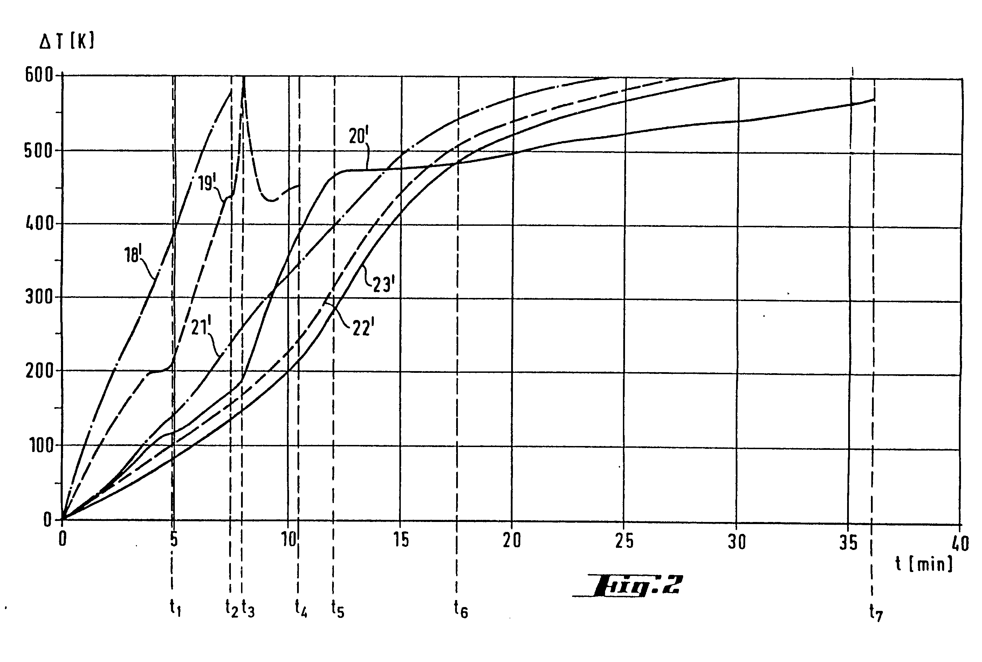

Das mit Hilfe dieser sechs Thermoelemente aufgenommene Temperaturdiagramm, aus dem sich der Versuchsverlauf ablesen läßt, ist in Fig. 2 dargestellt. In diesem Diagramm entspricht Kurve 18′ der von dem Thermoelement 18 gemessenen Temperatur im Mittelfeld der dem Feuer ausgesetzten Glasscheibe 2, die Kurve 19′ der von dem Thermoelement 19 gemessenen Temperatur im Mittelfeld der mittleren Glasscheibe 3, und die Kurve 20′ der von dem Thermoelement 20 gemessenen Temperatur im Mittelfeld der der Feuerseite abgewandten Glasscheibe 4. Die gemessenen Temperaturen stellen jeweils die Temperatur an der Oberfläche der Glasscheiben dar.

Die Kurve 21′ stellt den von dem Thermoelement 21 gemessenen Temperaturverlauf der dem Feuer zugewandten Glasscheibe 2 in dem von der Glashalteleiste 12 überdeckten Randbereich dar, während die Kurven 22′ und 23′ jeweils den Temperaturverlauf im Randbereich der mittleren Glasscheibe 3 bzw. der dem Feuer abgewandten Glasscheibe 4 darstellen.

Unmittelbar nach Beginn des Brandversuchs steigt entsprechend der Kurve 18′ die Temperatur im Mittelfeld der dem Feuer ausgesetzten Glasscheibe 2 steil an, während die Temperatur in dem gegen die unmittelbare Hitzebeaufschlagung geschützten Randbereich entsprechend der Kurve 21′ nur verhältnismäßig langsam ansteigt. Nach etwa 5 Minuten (Zeitpunkt $t_1$) ist die dadurch bedingte Temperaturdifferenz zwischen dem Mittelfeld und dem Randbereich so groß geworden, daß die dadurch im Randbereich hervorgerufenen Zugspannungen zum Zerbersten dieser Glasscheibe 2 führen. In der Temperaturkurve 18′ macht sich diese Tatsache jedoch nicht bemerkbar, weil die beim Bruch der Glasscheibe entstandenen Glaskrümel über die Zwischenschicht 6 noch durch die Glasscheibe 3 eine Zeitlang festgehalten werden. Erst im Zeitpunkt $t_2$, das heißt nach etwa 7,5 Minuten, hat die Zwischenschicht 6 ihre Klebewirkung völlig verloren, und die Krümel der Glasscheibe 2 fallen herunter, so daß nunmehr die Glasscheibe 3 unmittelbar dem Feuer ausgesetzt ist.

Zum Zeitpunkt $t_1$, in dem die Glasscheibe 2 zerbricht, weist die Glasscheibe 3 eine Temperatur auf, die etwa 200° unter der Temperatur der Glasscheibe 2 liegt. Die Temperaturkurve 19′ steigt etwa parallel zur Temperaturkurve 18′ weiter an, bis im Zeitpunkt $t_3$, das heißt etwa 8 Minuten nach Beginn des Versuchs, die Temperaturdifferenz zwischen der Temperatur im Mittelfeld (Kurve 19′) und der Temperatur im Randbereich (Kurve 22′) so groß geworden ist, daß die dadurch entstehenden Zugspannungen im Randbereich zum Zerbersten der Glasscheibe 3 führen. Die Temperaturkurve 19′ fällt unmittelbar nach dem Bruch der Glasscheibe 3 steil ab, was in diesem Fall darauf zurückzuführen ist, daß das Thermoelement 19 seinen direkten Kontakt mit der Glasoberfläche der Glasscheibe 3 verloren hat. Im Zeitpunkt $t_4$, das heißt nach etwa 10,5 Minuten, fallen die Glaskrümel, die bis zu diesem Zeitpunkt noch durch die Zwischenschicht 5 festgehalten wurden, herunter, so daß nunmehr die Glasscheibe 4 allein für den Abschluß der Öffnung 7 sorgt. Diese Glasscheibe 4 ist im Rahmen noch fest eingespannt, weil die 10 Randbereiche der zerborstenen Glasscheiben 2 und 3 jeweils im Rahmen verbleiben.

Im Zeitpunkt $t_3$, in dem die Glasscheibe 3 zerbricht, weist die Glasscheibe 4 erst eine Temperatur auf, die etwa 350° unterhalb der Temperatur der Glasscheibe 3 liegt. Der bis dahin verhältnismäßig langsame Anstieg der Temperaturkurve 20′ im Mittelfeld der Glasscheibe 4 wird im Zeitpunkt $t_3$ deutlich steiler. Dieser bis zum Zeitpunkt $t_5$ andauernde steilere Anstieg der Temperaturkurve 20′ kann auf die durch das Verbrennen der organischen Zwischenschicht 5 hervorgerufene zusätzliche Wärmeentwicklung zurückgeführt werden. Dieser Verbrennungsvorgang ist im Zeitpunkt $t_5$ abgeschlossen, und der weitere Temperaturanstieg der Glasscheibe 4 verlangsamt sich, wie die Kurve 20′ zeigt. Zu der Verlangsamung des Temperaturanstiegs trägt auch die Tatsache bei, daß die Verbrennungsprodukte der Zwischenschicht 5 auf der Oberfläche der Glasscheibe 4 haften bleiben und dadurch eine Isolierschicht gegen die Wärmestrahlung und die konvektive Wärmeübertragung auf diese Glasscheibe bilden.

Wie die Temperaturkurven 20' und 23' zeigen, die den Temperaturverlauf im Mittelfeld und im Randbereich der Glasscheibe 4 darstellen, erwärmt sich der Randbereich der Glasscheibe 4 bis zum Zeitpunkt $t_3$ nur unwesentlich langsamer als das Mittelfeld der Glasscheibe, und auch in dem Zeitraum zwischen $t_3$ und $t_5$, in dem eine Beschleunigung der Temperaturerhöhung im Mittelfeld beobachtet wird, erreicht die Temperaturdifferenz zwischen Mittelfeld und Randbereich zu keinem Zeitpunkt Werte, die zu gefährlichen Zugspannungen im Randbereich der Glasscheibe 4 führen können. Überraschenderweise kehren sich im Zeitpunkt $t_5$ die Verhältnisse sogar um. Im Zeitpunkt $t_6$ haben Mittelfeld und Randbereich der Glasscheibe 4 dieselbe Temperatur, und wegen des steileren Anstiegs der Temperatur im Randbereich aufgrund der intensiven Wärmeleitung 11 durch die Rahmenkonstruktion einerseits und des niedrigeren Wärmeübergangs im Mittelfeld der Glasscheibe 4 andererseits vergrößert sich sogar mit zunehmender Zeit die Temperaturdifferenz mit umgekehrtem Vorzeichen. Infolge dieses Effektes ist der Randbereich dieser Glasscheibe 4 nicht nur frei von gefährlichen Zugspannungen, sondern wird sogar unter Druckspannungen gesetzt. Auf diese Weise ist sichergestellt, daß die Glasscheibe 4 nicht wie die Glasscheiben 2 und 3 durch das Entstehen von Zugspannungen im Randbereich zerbricht, sondern daß sie unzerbrochen im Rahmen bleibt, bis sie aus anderen Gründen, nämlich beispielsweise infolge des Erweichens des Glases, sich oben auf dem Rahmen löst und in sich zusammensackt. In dem beschriebenen Versuch ist das im Zeitpunkt $t_7$ der Fall, das heißt nach 36 Minuten. Bis zu diesem Zeitpunkt $t_7$ schließt die Glasscheibe 4 die Öffnung 7 vollständig ab, so daß die Bedingungen für die Feuerwiderstandsklasse G 30 voll erfüllt sind.

**Patentansprüche**

1. Verwendung einer aus wenigstens drei jeweils mindestens 3 mm dicken, parallel zueinander angeordneten, durch durchsichtige Kleberschichten aus einem thermoplastischen Kunststoff wie Polyvinylbutyral zu einer Verbundglasscheibe miteinander verbundenen einzelnen Floatglasscheiben bestehenden Verglasung, bei der wenigstens die beiden äußeren Floatglasscheiben thermisch vorgespannt sind, als feuerwiderstandsfähige Verglasung der Feuerwiderstandsklasse G 30 nach DIN 4102.

2. Verwendung einer Verglasung nach Anspruch 1, dadurch gekennzeichnet, daß die Dicke der einzelnen Glasscheiben jeweils 4 bis 6 mm beträgt.

3. Verwendung einer Verglasung nach Anspruch 1 oder 2, dadurch gekennzeichnet, daß die zwischen den äußeren vorgespannten Glasscheiben angeordnete Glasscheibe (angeordneten Glasscheiben) ebenfalls thermisch vorgespannt ist (sind).

4. Verwendung einer Verglasung nach Anspruch 3, dadurch gekennzeichnet, daß drei jeweils thermisch vorgespannte Glasscheiben aus jeweils 4 mm dickem Floatglas durch zwei jeweils etwa 0,4 mm dicke Zwischenschichten aus Polyvinylbutyral miteinander verbunden sind.

5. Verwendung einer Verglasung nach Anspruch 3, dadurch gekennzeichnet, daß vier jeweils thermisch vorgespannte Glasscheiben durch drei jeweils etwa 0,4 mm dicke Zwischenschichten aus Polyvinylbutyral miteinander verbunden sind.

**Revendications**

1. Utilisation à titre de vitrage pare-feu de la classe pare-feu G 30 suivant la norme DIN 4102 d'un vitrage constitué d'au moins trois feuilles de verre flotté individuelles d'une épaisseur d'au moins 3 mm chacune, disposées parallèlement l'une à l'autre et réunies l'une à l'autre en une vitre en verre feuilleté par des couches d'adhésif transparent en une matière thermoplastique, comme le polyvinylbutyral, au moins les deux feuilles de verre flotté extérieures du verre feuilleté ayant subi une trempe thermique.

2. Utilisation d'un vitrage suivant la revendication 1, caractérisée en ce que l'épaisseur des feuilles de verre individuelles est chaque fois de 4 à 6 mm.

3. Utilisation d'un vitrage suivant la revendication 1 ou 2, caractérisée en ce que la ou les feuilles de verre disposée(s) entre les feuilles de verre trempées extérieures a ou ont également subi une trempe thermique.

4. Utilisation d'un vitrage suivant la revendication 3, caractérisée en ce que trois feuilles de verre ayant chacune subi une trempe thermique et constituées chacune de verre flotté de 4 mm, sont unies l'une à l'autre par deux couches intermédiaires en polyvinylbutyral d'une épaisseur de 0,4 mm chacune.

5. Utilisation d'un vitrage suivant la revendication 3, caractérisée en ce que quatre feuilles de verre ayant chacune subi une trempe thermique sont unies l'une à l'autre par trois couches intermédiaires en polyvinylbutyral d'une épaisseur de 0,4 mm chacune.

**Claims**

1. Use of a glazing, which consists of at least three individual float glass panes which are each at least 3 millimetres thick, are arranged one parallelly to the other and connected one with the other into a compound glass pane by transparent adhesive layers of a thermoplastic synthetic material such as polyvinyl butyral and in which at least both the outer float glass panes are prestressed thermally, as glazing capable of fire resistance and of the fire resistance class G 30 according to German Industrial Norm 4102.

2. Use of a glazing according to claim 1, characterised thereby, that the thickness of the individual glass panes each amounts to 4 to 6 millimetres.

3. Use of a glazing according to claim 1 or 2, characterised thereby, that the or each glass pane arranged between the outer prestressed glass panes is likewise prestressed thermally.

4. Use of a glazing according to claim 3, characterised thereby, that three glass panes, which are each of float glass 4 millimetres thick and prestressed thermally, are connected one with the other by two intermediate layers each about 0.4 millimetres thick and of polyvinyl butyral.

5. Use of a glazing according to claim 3, characterised thereby, that four glass panes, which are each prestressed thermally, are connected one with the other by three intermediate layers each about 0.4 millimetres thick and of polyvinyl butyral.

Fig. 1

Fig.2

EP 0 219 801 B1